Europäisches Patentamt

**European Patent Office**

**Office européen des brevets**

(19)

(11) Numéro de publication: **0 063 514**

**A1**

# (12) DEMANDE DE BREVET EUROPEEN

(21) Numéro de dépôt: **82400608.4**

(22) Date de dépôt: **01.04.82**

(51) Int. Cl.³: **F 02 B 71/04**
**H 02 K 7/18, F 01 B 11/00**

(30) Priorité: **03.04.81 FR 8106759**

(43) Date de publication de la demande:
**27.10.82 Bulletin 82/43**

(84) Etats contractants désignés:
**AT BE CH DE GB IT LI LU NL SE**

(71) Demandeur: **Vallon, Roger**
**3 rue des Pleins Champs**
**F-76000 Rouen(FR)**

(72) Inventeur: **Vallon, Roger**
**3 rue des Pleins Champs**
**F-76000 Rouen(FR)**

(74) Mandataire: **Phélip, Bruno et al,**
**c/o Cabinet Harlé & Phélip 21, rue de La Rochefoucauld**
**F-75009 Paris(FR)**

(54) Générateur électrique de moyenne puissance à piston libre.

(57) Dispositif générateur de courant électrique.

Il comprend essentiellement:

– un cylindre vertical (1) ouvert à son extrémité supérieure, équipé sur au moins une portion de sa longueur de bobines inductrices (3) et comportant dans sa partie basse une chambre d'explosion unique (2), alimentée par un mélange comburant-carburant explosible sous pression ou une charge explosive et comportant des moyens assurant l'explosion si nécessaire,

– un piston libre (4), dont au moins une partie est constituée par une masse magnétique (5) et dont le retour en position basse est assuré par la force de gravité

– des clapets ou soupapes (8) pour l'évacuation des gaz brûlés, dans la partie inférieure du cylindre, et un système de synchronisation de l'ouverture et de la fermeture de ces clapets ou soupapes avec le mouvement du piston.

Application aux générateurs de courant électrique de moyenne puissance, fixes ou embarqués.

./...

EP 0 063 514 A1

Croydon Printing Company Ltd.

FIG. UNIQUE

1.

"Générateur électrique de moyenne puissance à piston libre "

La présente invention concerne un générateur électrique à piston libre.

On connaît déjà des générateurs à pistons libres qui, selon le principe Diesel, alimentent en gaz chauds à environ 450°C et sous une pression moyenne (environ $3,10^5$ pascals) des turbo-alternateurs de moyenne puissance. De tels générateurs ont un rendement global/qui, étant de 35-36 %, est comparable à celui d'un système Diesel-alternateur classique.

Ont également été décrits, plus récemment, des moteurs à pistons libres horizontaux, équipés d'un ou de deux pistons opposés dans leur mouvement, portant une masse annulaire magnétique et qui, passant alternativement dans un sens et dans l'autre au milieu de bobines inductrices incluses dans le cylindre où se meuvent les pistons, génèrent dans ces bobines un courant électrique. Dans le cas de ces moteurs, la compression du mélange Diesel à une pression convenable est assurée par le renvoi du ou des pistons, grâce à l'énergie emmagasinée dans des ressorts ou des accumulateurs hydrauliques convenablement conçus quant à leur fonction et à l'entretien de leur capacité d'accumulation au cours du temps.

D'autre part, le brevet US 3.105.153 et la demande de brevet FR 2.204.068 concernent, l'un comme l'autre, des générateurs de courant électrique à piston libre; l'un est suspendu par des bras oscillants, tandis que l'autre peut être horizontal.

Ces deux types d'appareils sont à cylindre fermé. En outre ils demandent, soit à une autre explosion dans une seconde chambre de combustion (brevet US 3.105.153), soit à des ressorts métalliques (demande FR 2.204.068), d'assurer le retour du ou des pistons et la compression du mélange gazeux nécessaire pour l'explosion suivante.

On a maintenant trouvé qu'on pouvait réaliser un générateur électrique de moyenne puissance à piston libre unique, vertical, dans lequel le retour du piston est assuré par la force de gravité, et que l'appareillage ainsi réalisé, tout en étant de conception simple, permet la production de courant électrique avec un rendement exceptionnellement élevé et ne dégage en fonctionnement normal que des gaz très peu polluants, ne contenant pas ou peu d'imbrûlés.

La présente invention a pour objet un dispositif générateur de courant électrique de moyenne puissance, à piston libre coulissant avec contact étanche à l'intérieur d'un cylindre, caractérisé en ce qu'il comprend fondamentalement :

- un cylindre vertical (1) ouvert à son extrémité supérieure, équipé sur au moins une portion de sa longueur de bobines inductrices (3) et comportant dans sa partie basse une chambre d'explosion unique (2), alimentée par un mélange comburant-carburant explosible sous pression ou une charge explosive et comportant des moyens assurant l'explosion si nécessaire,

- un piston libre (4), dont au moins une partie est constituée par une masse magnétique (5) et dont le retour en position basse est assuré par la force de gravité,

- des clapets ou soupapes (8) pour l'évacuation des gaz brûlés, dans la partie inférieure du cylindre, et un système de synchronisation de l'ouverture et de la fermeture de ces clapets ou soupapes avec le mouvement du piston,

- ainsi que des évents /( 6 ) situés dans la partie supérieure du cylindre, au-delà du point mort haut du piston en fonctionnement normal, et éventuellement des organes de refroidissement (9, 10, 11) disposés dans le corps du cylindre et/ou sur la surface externe du cylindre, sur au moins une partie de la longueur de celui-ci, et sur le piston.

Un tel dispositif constitue une machine thermique utilisant le principe connu des moteurs à pistons libres, et plus particulièrement celui des générateurs de courant électrique à pistons libres qui permettent la production d'un courant continu d'intensité, de tension et de sens variables.

Dans le dispositif selon l'invention, le retour du piston est assuré, non plus comme dans les appareillages actuels par un ensemble complexe de bielles, d'arbres ou d'accumulateurs hydrauliques, mais par la seule force de gravité, ce qui est rendu possible par la disposition verticale du cylindre; cette disposition permet en outre de réduire au maximum les frottements.

C'est l'énergie cinétique prélevée sur l'énergie fournie par une explosion qui, convertie en énergie potentielle lorsque le piston est parvenu à son point mort haut, assure lors du retour du piston en position basse au moins en partie, la compression des fluides dans la chambre de combustion en vue de l'explosion suivante. La mise en pression et l'explosion du mélange air-essence, air-fuel ou air-gaz se font comme il est connu pour les moteurs Diesel ou les moteurs à essence.

Selon une forme de mise en oeuvre de la présente invention, l'explosion, qui constitue la source de l'énergie à transformer en courant électrique, est fournie par la déflagration ou la détonation d'une quantité convenablement dosée de substance explosive, choisie parmi celles connues de l'homme de l'art comme appropriée aux caractéristiques de l'appareillage, et introduite dans la chambre d'explosion en bas du cylindre lors de chaque retour du piston en position basse.

Selon une variante tout particulièrement préférée du dispositif selon l'invention, celui-ci comprend un piston à deux étages, dont l'étage supérieur muni de segments d'étanchéité est sensiblement du diamètre interne du cylindre, tandis que l'étage inférieur est de diamètre plus réduit et est destiné à venir s'engager seul dans la chambre d'explosion proprement dite, elle-même sensiblement du même diamètre. L'étage inférieur susdit du piston à deux étages peut être avantageusement pourvu, lui aussi, de segments d'étanchéité, bien que cela ne soit pas indispensable.

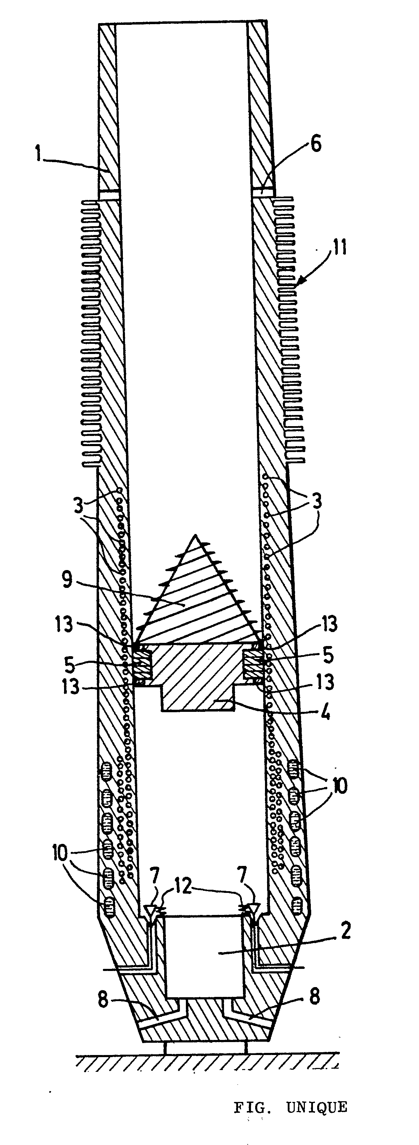

L'invention est décrite ci-après plus en détail en référence à la figure unique des dessins annexés, qui représente en coupe schématique les éléments principaux composant le dispositif selon l'invention, selon une forme de réalisation purement illustrative, qui ne limite aucunement l'invention.

Le générateur électrique à piston libre illustré sur cette figure comprend notamment un fût cylindrique 1, placé verticalement et ouvert à l'air libre à son extrémité supérieure. La chambre de combustion ou d'explosion 2 est située dans le bas et le fond du cylindre est fermé. Cette chambre a un volume calculé en fonction de la puissance à obtenir pour chaque explosion et en fonction du type et des caractéristiques du mélange explosif utilisé; elle est alimentée, selon les disponibilités, en mélange air-essence, air-fuel ou air-gaz, dans les meilleures conditions connues de l'homme de l'art, qui sont éprouvées de longue date dans les moteurs à essence ou les moteurs Diesel, selon le cas, à savoir : injection mécanique, suralimentation par turbo-soufflante alimentée par les gaz d'échappement, etc...

Le cylindre 1 est équipé, dans des conditions que des essais préliminaires auront permis de déterminer comme étant les meilleures conditions de rendement, d'une série au moins de bobines inductrices 3 dont la densité des spires est calculée en fonction de la tension souhaitée aux bornes du circuit, et en tenant compte du fait que la vitesse du piston 4 portant la masse magnétique 5 diminue lorsque le piston s'élève dans le cylindre jusqu'à son point mort haut, qui correspond à l'équilibre des pressions entre l'intérieur de la chambre d'expansion des gaz que surmonte le piston et l'atmosphère.

Par mesure de sécurité, le cylindre, dont la longueur hors tout peut être, par exemple, d'environ 490 cm pour un diamètre intérieur d'environ 60 cm, doit être pourvu dans sa partie haute, à un niveau légèrement supérieur à celui qu'atteint le piston à la fin de sa course si le fonctionnement est normal, d'un ou plusieurs évents 6 qui garantissent que le piston ne monte pas notablement plus haut que prévu dans le cylindre en cas de surpression accidentelle. Il faut souligner que ces évents ne sont pas normalement affectés à l'évacuation des gaz brûlés en fonctionnement normal; cette évacuation se fait, comme indiqué plus haut, par les clapets ou soupapes 7 disposés à la partie basse du cylindre et dont l'ouverture est commandée par un
dispositif qui est conçu pour prendre comme point
de départ de cette ouverture sensiblement le stade
où le piston va redescendre du point mort haut; la
fermeture des clapets ou soupapes 7 est commandée
par ce même organe et déclenchée par le passage du
piston en un point du cylindre calculé au préalable
comme étant celui où, le volume contenu dans le piston ayant été convenablement balayé, la compression
des gaz résiduels assurée par l'énergie cinétique du
piston s'ajoutant à la pression des gaz comburants
et du carburant introduits, font régner dans la
chambre d'explosion proprement dite (2) les conditions de l'allumage ou de l'auto-allumage.

Comburant - carburant ou matière explosive sont introduits par les moyens classiques en
quantités dosées en 8, dans la partie inférieure de
la chambre d'explosion.

Le refroidissement de cet appareillage
est réalisé par tout moyen classique approprié; le
cylindre peut par exemple être refroidi par une circulation d'eau 10 dans sa partie basse où sa température est la plus élevée, tandis qu'il peut n'être
refroidi dans sa partie supérieure que par des ailettes externes 11, qui augmentent la surface d'échange thermique avec le milieu ambiant. Le refroidissement du piston peut, quant à lui, être amélioré si on le souhaite par l'adjonction sur la face
supérieure du piston d'un élément à ailettes 9 apte
à tirer le meilleur profit du déplacement vertical
alterné pour libérer dans l'air ambiant une fraction
maximale des joules contenus dans la masse du piston. Cet élément 9 est de préférence conique et hélicoïdal, en matériau facilitant l'échange thermique, et assure une légère rotation du piston répartissant favorablement l'usure de la paroi du cylindre.

Il faut toutefois noter que la détente des gaz générés par l'explosion peut pratiquement se poursuivre jusqu'à son terme dans ce système, ce qui fait que, contrairement à ce qui se produit dans les systèmes classiques, le refroidissement naturel des gaz brûlés qui en résulte permet d'amener ceux-ci à une température qui n'excède pas 250°C.

Le piston 4 est équipé d'aimants permanénts 5, par exemple de forme annulaire, noyés dans la masse non magnétique qui donne sa forme et ses dimensions au piston. La puissance de ces aimants est calculée de façon à assurer avec les bobines inductrices du cylindre le freinage le plus rapide et la création d'un courant continu ayant l'intensité et la tension désirées. Dans le cas du fonctionnement de type Diesel, le piston doit avoir une masse telle que l'énergie cinétique à la fin de sa course de retour assure, dans la chambre d'explosion proprement dite, la pression de 1,2 à 2 x $10^6$ pascals nécessaire à l'auto-allumage du mélange Diesel. Un tel piston a avantageusement deux étages, comme indiqué plus haut, de la même façon que ce qui est actuellement connu pour certains types de moteurs. Cette configuration à deux étages permet d'assurer dans de bonnes conditions le balayage des gaz brûlés à la descente du piston; c'est la partie inférieure du piston, de diamètre réduit, qui vient s'engager dans la chambre d'explosion proprement dite. L'explosion une fois obtenue, le piston repart vers le haut et permet l'expansion des gaz dans le volume de plus grand diamètre, qui autorise des bobines et des aimants de grande puissance; on limite ainsi la hauteur du cylindre à la longueur optimale du point de vue de la détente et de la qualité de la combustion; celle-ci étant quasiment complète puisque rien ne vient la limiter en pratique, la pollution due à d'éventuels imbrûlés est réduite à un minimum.

Les aimants permanents, ainsi que la masse non magnétique constituant le piston, doivent pouvoir résister aux chocs répétés et à la température élevée du début de la combustion. Le piston peut avantageusement être équipé sur sa face inférieure en contact avec la chambre d'explosion chaude d'un revêtement isolant résistant aux températures élevées.

Dans le cas du fonctionnement avec charge explosive, le piston peut être plus léger, mais il doit être très résistant aux chocs. Il peut alors avoir un diamètre unique, la chambre d'explosion étant très réduite. Dans ce cas, il n'y a pas à prévoir de compression de gaz au retour du piston, mais simplement un confinement convenable au moment de l'explosion (déflagration ou détonation). Selon cette variante utilisant une charge explosive, il importe par contre de maintenir le circuit électrique fermé, de telle sorte que le fonctionnement des bobines, ainsi maintenu pendant la phase de descente du piston, freine ce dernier et génère encore un courant continu, mais avec un sens opposé à celui qui est produit pendant le mouvement ascendant du piston.

A l'opposé, dans le cas d'un mélange de comburant et de carburant, il est avantageux d'ouvrir le circuit dès que le piston est en position haute et de ne le refermer qu'au moment où se produit l'explosion suivante.

L'ensemble repose sur un socle convenablement conçu pour absorber un très grand nombre de chocs provoqués par les explosions répétées. Cet amortissement peut avantageusement être obtenu par un amortisseur hydraulique.

Les bobines sont raccordées en fonction de l'utilisation à laquelle le dispositif est destiné et de la transformation souhaitée du courant obtenu.

En fonctionnement, un mélange gazeux convenable air-essence ou air-fuel ou air-gaz s'enflamme sous l'action d'une étincelle ou de la pression, ou bien une charge explosive appropriée est mise à feu; le piston est propulsé vers le haut à une vitesse assez grande, aussitôt ralentie par la création du courant continu. Les gaz détendus par expansion se refroidissent et le piston s'immobilise au sommet de sa course. Le piston redescend, balayant les gaz brûlés et comprimant en fin de parcours les gaz brûlés restants et les gaz injectés sous pression élevée dans la chambre de combustion. L'injection du carburant sous forte pression ou la mise à feu de la charge explosive provoque l'inflammation rapide et l'expansion des gaz produits. Le piston repart alors vers le haut pour un nouveau cycle.

Le courant créé dans le circuit des bobines peut être utilisé soit pour alimenter un réseau d'accumulateurs classiques, soit directement par une génératrice adaptée, soit de préférence pour l'électrolyse sous ses multiples formes.

Ce courant peut ainsi servir dans un électrolyseur fonctionnant sous pression (2 à 3 x $10^6$ pascals) et à température élevée; l'hydrogène et l'- oxygène produits sont introduits sous pression dans un turbo-alternateur, tandis qu'on évite la détonation du mélange en y introduisant au moins une partie des gaz d'échappement du générateur selon l'invention. Le turbo-alternateur ainsi alimenté produit du courant alternatif à la tension désirée. Un stockage de faible volume suffit à assurer la régularité du fonctionnement de la turbine et à compenser le fait que la création du courant continu est cyclique.

L'oxygène produit dans l'électrolyseur sous pression peut être utilisé directement dans la chambre de combustion du générateur. Cette quantité d'oxygène pur doit être complétée par une quantité sensiblement supérieure d'air introduite sous pression plus faible (environ 6 x 10$^5$ pascals) dans la chambre d'explosion un peu avant l'oxygène pur et le carburant. Ce procédé permet de réduire le volume de la chambre d'explosion et d'améliorer encore sensiblement le rendement global en évitant de porter à une température élevée une quantité d'azote qui ne participe que négativement aux processus d'-explosion habituels. Dans ce cas de figure, l'hydrogène sortant de l'électrolyseur sous pression peut être brûlé avec de l'air dans une turbine. A la sortie de la turbine, après détente et refroidissement, on récupère la quantité d'eau nécessaire à l'alimentation de l'électrolyseur. L'hydrogène ainsi produit dans des conditions particulièrement avantageuses peut être utilisé dans l'hydrogénochimie et l'-hydrogénométallurgie.

Le générateur selon l'invention peut être utilisé soit à poste fixe, soit embarqué (par exemple à bord de navires).

Comme il a été exposé plus haut, l'amélioration du rendement de ce type de générateur par rapport aux rendements obtenus dans les moteurs Diesel de 1000 à 6000 KWh environ provient d'une part de la quasi-suppression des frottements, qui absorbent classiquement 5 % environ de l'énergie créée dans les moteurs, et d'autre part de l'utilisation complète de la détente des gaz qui, n'excédant pas à l'échappement 240°C environ, induisent une amélioration directe du rendement énergétique. Par la même sont réduites environ de moitié les pertes dues au nécessaire refroidissement du cylindre. Comme les pertes habituellement constatées sur les moteurs de cette puissance sont d'environ 28 %, l'amélioration du rendement à ce niveau peut encore être de 14 % environ.

Au total, le rendement du générateur proprement dit peut atteindre 57 %, desquels il faut naturellement déduire les pertes inhérentes aux organes de transformation du courant électrique produit. Mais la perte à ce niveau peut être faible si l'on utilise directement dans des installations d'électrolyse le courant produit. Elle peut encore n'-être que de 3 % environ si l'on utilise le synthétiseur électronique susdit. Dans le cas d'un ensemble de transformation de courant comprenant une batterie d'accumulateurs et un système génératrice-alternateur, le rendement final est encore de 43 % environ.

Sans que ces valeurs puissent constituer une limitation de la présente invention, on peut donner au cylindre du présent générateur une longueur de 5 à 6 mètres et un diamètre intérieur de 500 mm, tandis que la partie inférieure du piston à deux étages comme susdit a un diamètre de 300-400 mm.

Avec un piston ayant la masse appropriée, la fréquence des mouvements est de 30-40 coups/minute pour un générateur type Diesel. La puissance fournie est alors d'environ 1200 à 1800 KWh.

La consommation est, pour 1 KWh environ, d'environ 150 g de fuel ou équivalent.

La température des gaz à la sortie est de 200 à 240°C environ et on peut récupérer ces gaz, au moins partiellement pour la conduite de la turbo-soufflante chargée de la sur-alimentation dans le cas du Diesel.

Pour palier toute défaillance d'alimentation, ainsi que pour l'arrêt du fonctionnement, il est prévu un système d'amortissement 12 à la partie basse du cylindre en dehors de la chambre d'explosion.

Le graissage du piston se fait au point-mort haut par injection d'une quantité d'huile appropriée entre les segments d'étanchéité 13 .

REVENDICATIONS.

1. Dispositif générateur de courant électrique de moyenne puissance, à piston libre coulissant avec contact étanche à l'intérieur d'un cylindre, caractérisé en ce qu'il comprend fondamentalement :

- un cylindre vertical (1) ouvert à son extrémité supérieure, équipé sur au moins une portion de sa longueur de bobines inductrices (3) et comportant dans sa partie basse une chambre d'explosion unique (2), alimentée par un mélange comburant-carburant explosible sous pression ou une charge explosive et comportant des moyens assurant l'explosion si nécessaire,

- un piston libre (4), dont au moins une partie est constituée par une masse magnétique (5) et dont le retour en position basse est assuré par la force de gravité,

- des clapets ou soupapes (8) pour l'évacuation des gaz brûlés, dans la partie inférieure du cylindre, et un système de synchronisation de l'ouverture et de la fermeture de ces clapets ou soupapes avec le mouvement du piston,

- ainsi que des évents (6) situés dans la partie supérieure du cylindre, au-delà du point mort haut du piston en fonctionnement normal, et éventuellement des organes de refroidissement (9, 10, 11) disposés dans le corps du cylindre et/ou sur la surface externe du cylindre, sur au moins une partie de la longueur de celui-ci, et sur le piston.

2. Dispositif selon la revendication 1, caractérisé en ce qu'il utilise des mélanges air-essence, air-fuel ou air-gaz, ou l'explosion d'une charge de substance explosive déflagrante ou brisante.

3. Dispositif selon la revendication 1, caractérisé en ce qu'il comprend un piston à deux étages, dont seul l'étage supérieur est sensiblement du diamètre interne du cylindre, tandis que l'étage inférieur est de diamètre plus réduit et est destiné à venir s'engager seul dans la chambre d'-explosion proprement dite, elle-même sensiblement du même diamètre.

4. Dispositif selon la revendication 1, caractérisé en ce qu'il comprend, pour l'évacuation des gaz d'échappement, des clapets ou soupapes disposés à la partie basse du cylindre et dont l'ouverture est commandée par un dispositif qui est conçu pour prendre comme point de départ de cette ouverture sensiblement le stade où le piston est au point mort haut, tandis que la fermeture de ces clapets ou soupapes est commandée par ce même organe et déclenchée par le passage du piston en un point de la hauteur du cylindre calculé au préalable comme étant celui à partir duquel le volume de gaz contenu en-dessous du piston a été convenablement balayé; la compression exercée par la descente du piston jusqu'à son point mort bas, peut amenant alors à une pression correspondant sensiblement à celle qui doit régner dans la chambre d'explosion où peut se produire l'auto-allumage ou l'étincelle, ou complétant celle des gaz introduits pendant ce même temps sous forte pression dans la chambre d'explosion.

5. Dispositif selon la revendication 1, caractérisé en ce que le piston a une masse telle que l'énergie cinétique a la fin de sa course de retour assure, dans la chambre de combustion ou d'- explosion proprement dite, une pression de 1,2 à 2 x $10^6$ pascals.

6. Dispositif selon la revendication 1, caractérisé en ce que les bornes de sortie des bobines d'induction sont reliées à une cuve d'électrolyse, avec interposition éventuelle d'appareils de régulation et de transformation classiques.

7. Dispositif selon la revendication 1, caractérisé en ce qu'il est relié successivement à un électrolyseur fonctionnant sous pression et à température élevée, et à un turbo-alternateur dans lequel sont introduits l'hydrogène et l'oxygène produits, ainsi qu'au moins une partie des gaz d'échappement dudit dispositif.

8. Dispositif selon la revendication 7, caractérisé en ce qu'il utilise l'oxygène produit sous pression dans un électrolyseur pour assurer, conjointement avec de l'air sous pression, la combustion du carburant dans la chambre d'explosion.

0063514

FIG. UNIQUE

Office européen
des brevets

**RAPPORT DE RECHERCHE EUROPEENNE**

**0063514**
Numéro de la demande

EP 82 40 0608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US - A - 3 105 153 (JAMES) <br><br> * figure 1; colonne 1, ligne 47 - colonne 2, ligne 49 * | 1,2 | F 02 B 71/04 <br> H 02 K 7/18 <br> F 01 B 11/00. |
| A | FR - A - 2 204 068 (DEMETRESCU) <br><br> * figures 2-4; page 12, ligne 4 - page 15, ligne 34; pages 17 lignes 10-18 * | 1-4 | |
| A | FR - A - 894 912 (MENCK & HAMBROCK) <br><br> * figures 1-3; page 4, lignes 71-100* | 1,2 | |
| A | US - A - 4 020 804 (BAILEY) <br><br> * figures 1,4; colonne 5, ligne 4 - colonne 6, ligne 54 * | 1,2,6 | |

**DOMAINES TECHNIQUES RECHERCHES (Int. Cl. 3)**

F 01 B
F 02 B
H 02 K
E 02 D

Le présent rapport de recherche a été établi pour toutes les revendications

| Lieu de la recherche | Date d'achèvement de la recherche | Examinateur |
|---|---|---|
| LA HAYE | 08-07-1982 | VON ARX |